# EUROPEAN PATENT SPECIFICATION

(11) **EP 3 683 128 B1**
(45) Date of publication and mention of the grant of the patent: **15.01.2025**
(21) Application number: 19211104.5
(22) Date of filing: 25.11.2019
(51) Int. Cl.: B62K 5/05, B60G 21/05, B62D 9/02, B62K 5/08, B62K 5/10

(54) **TILTING MECHANISM OF VEHICLE HAVING TWO FRONT WHEELS**
KIPPMECHANISMUS EINES FAHRZEUGS MIT ZWEI VORDERRÄDERN
MÉCANISME D'INCLINAISON DE VÉHICULE DOTÉ DE DEUX ROUES AVANT

(30) Priority: 19.01.2019 TW 108200948 U
(43) Date of publication of application: 22.07.2020
(73) Proprietor: Kwang Yang Motor Co., Ltd., Kaohsiung City (TW)
(72) Inventor: Ting, Hsin-Chih, Cambridge, CB1 1AH (GB); Lee, Yen-Hsiu, Cambridge, CB1 1AH (GB)
(74) Representative: Horak, Michael

(56) References cited:
- EP-A1- 1 561 612
- EP-A1- 2 977 307
- EP-A1- 3 002 200
- EP-A1- 3 002 202
- EP-A1- 3 202 650

## Description

### TECHNICAL FIELD OF THE INVENTION

The present invention relates to a tilting mechanism of a vehicle having two front wheels, and more particularly to a vehicle having two front wheels that helps suppress enlargement of a front part of a steering support member of a vehicle and also helps improve a capability of resisting a centrifugal effect caused by the vehicle passing through a road curve at a high speed, so as to enhance operation safety of the vehicle.

### DESCRIPTION OF THE PRIOR ART

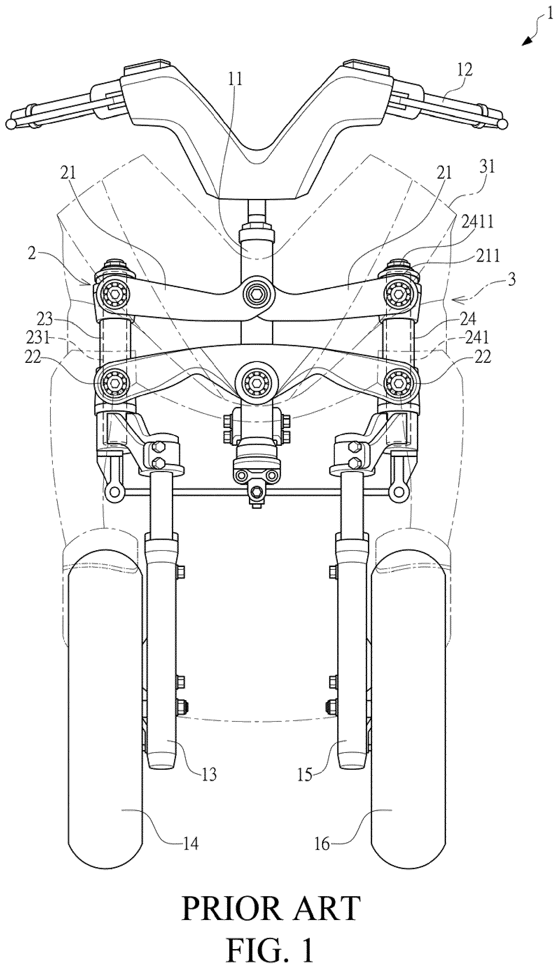

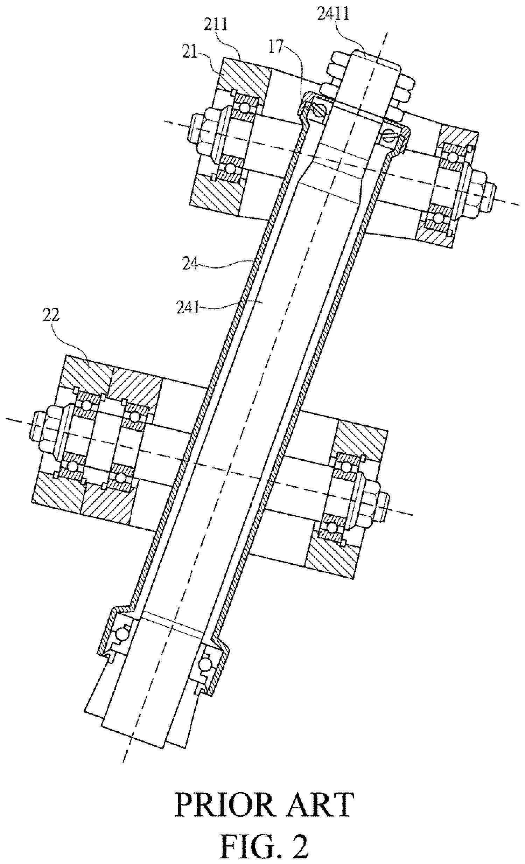

As shown in FIGS. 1 and 2, a vehicle 1 that has two front wheels includes a tilting mechanism 2 that is disposed on a steering support member 11. The tilting mechanism 2 comprises an upper crossbar 21 rotatably mounted to the steering support member 11, a lower crossbar 22 rotatably mounted to the steering support member 11 and located below the upper crossbar 21, a right-side bar 23 pivotally jointed to the upper crossbar 21 and the lower crossbar 22, and a left-side bar 24 pivotally jointed to the upper crossbar 21 and the lower crossbar 22 (wherein the right side and the left side used herein are respectively defined that the right side is the side corresponding to the right hand of a rider sitting on the vehicle body and the left side is the side corresponding to the left hand of the rider). The right-side bar 23 is arranged to receive a right-side axle 231 to penetrate therethrough, the right-side bar 23 being coupled, at a lower side thereof, to a right-side shock absorber 13, the right-side shock absorber 13 supporting, at a lower end thereof, a right-side front wheel 14; the left-side bar 24 is arranged to receive a left-side axle 241 to penetrate therethrough, the left-side axle 241 being coupled, at a lower end thereof, to a left-side shock absorber 15, the left-side shock absorber 15 supporting, at a lower end thereof, a left-side front wheel 16.

As shown in FIGS. 1 and 2, the right-side bar 23 necessarily drives the right-side front wheel 14 to rotate (changing direction), and the left-side bar 24 necessarily drives the left-side front wheel 16 to rotate (changing direction), the right-side bar 23 and the left-side bar 24 being of identical structures, such that in the following description, only the left-side bar 24 is taken as an example to explain an inside structure thereof; the left-side axle 241 penetrating through the left-side bar 24 has an outer circumference that is fit with a bearing unit 17, and specifically speaking, the left-side bar 24 is expanded outward to form a stepped portion to support the bearing unit 17 sitting thereon, the bearing unit 17 being arranged above a pivotal joint point of the left-side bar 24 and the upper crossbar 21, so as to cause an upper end part 2411 of the left-side axle 241 of the left-side bar 24 to project beyond an upper end face 211 of the upper crossbar 21, and with the upper end part 2411 of the left-side axle 241 of the left-side bar 24 being so projecting outside the upper end face 211 of the upper crossbar 21 at the site corresponding to the left-side axle 241, a front vehicle-body cover 31 of a vehicle-body cover 3 that is arranged to cover the tilting mechanism 2 must be enlarged in order to avoid interference with the upper end part 2411 of the left-side bar 24.

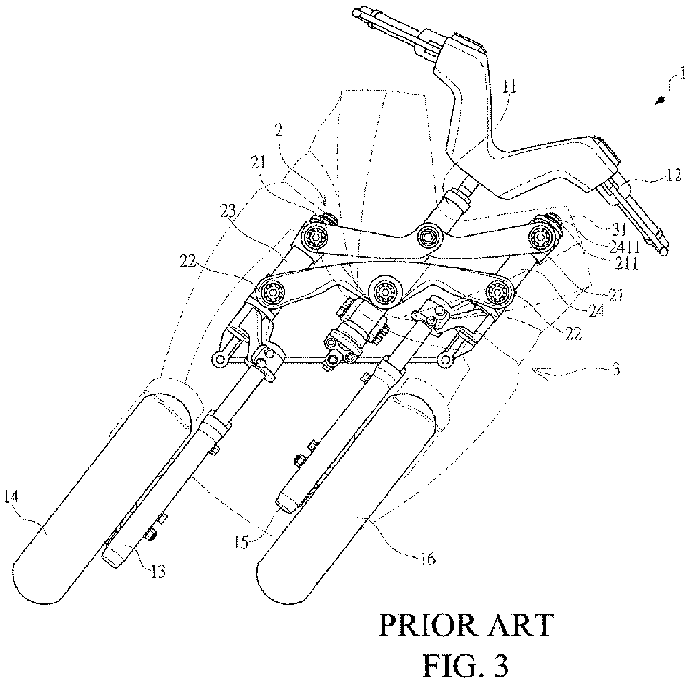

As shown in FIG. 3, it is publicly known that the tilting mechanism 2 uses a swing angle of the upper crossbar 21 and the lower crossbar 22 and a pivotal joint width of the right-side bar 23 and the left-side bar 24 to define distances of upward and downward swings of the left-side and right-side front wheels 16, 14, wherein the larger the distance of upward and downward swings of the left-side and right-side front wheels 16, 14, and the larger the tilting angle that the vehicle 1 is allowed to make, and speaking more specifically, the larger the tiling angle that the entirety of the vehicle 1 is allowed to make, the better the capability of resisting a centrifugal effect caused by the vehicle 1 passing through a road curve at a high speed in order to ensure riding safety of the vehicle 1; however, the upper end part 2411 of the left-side axle 241 of the left-side bar 24 projecting beyond the upper end face 211 of the upper crossbar 21 makes the front vehicle-body cover 31 of the vehicle-body cover 3 that covers the tilting mechanism 2 necessarily enlarged, and speaking more specifically, an upper side end of the front vehicle-body cover 31 is caused to extend toward a steering handlebar 12 of the steering support member 11, so that the front vehicle-body cover 31 of the vehicle-body cover 3, being so enlarged, would imposes limitation to design clearance and control clearance of the steering handlebar 12 of the steering support member 11, and in addition, due to the design of the front vehicle-body cover 31 of the vehicle-body cover 3 being necessarily considered in combination with the entirety of the vehicle-body cover 3, the design of the front vehicle-body cover 31 of the vehicle-body cover 3 is thus difficult, and in the worst condition, the tilting angle of the entirety of the vehicle 1 might be undesirably constrained.

Prior art patent documents are known, such as EP 3 002 200 A1, EP 1 561 612 A1, EP 3 002 202 A1, EP 3 202 650 A1, and EP 2 977 307 A1.

EP 3 002 200 A1 discloses a vehicle provided leaning-capable vehicle-body frame and two front wheels. EP 3 002 200 A1 teaches a link mechanism 5 that includes an upper cross portion, a lower cross portion, a left side portion, and a right side portion to enable the vehicle to lean. The upper ends of the left side portion and the right side portion are not projecting beyond an upper end face of the upper cross portion. However, EP 3 002 200 A1 does not teach a bearing that supports an axle penetrating through the left side portion or the right side portion is located below a rotation center axis of the pivotal joint between the left side portion or the right side portion and the upper cross portion. The other prior art documents also provide no teaching that a bearing that supports an axle penetrating through the left side portion or the right side portion is located below a rotation center axis of the pivotal joint between the left side portion or the right side portion and the upper cross portion.

Document EP 2 977 307 A1 discloses a tilting mechanism of a vehicle according to the preamble of claim 1.

Thus, it is a challenge for the vehicle industry to provide a structure of tilting mechanism for vehicles having two front wheels in order to prevent undesired enlargement of a front vehicle-body cover of a vehicle and to preserve a desired tilting angle for the entirety of the vehicle to thereby improve operation safety or the vehicle.

### SUMMARY OF THE INVENTION

The primary objective of the present invention is to provide a tilting mechanism of a vehicle having two front wheels, which helps alleviate a drawback of enlargement of a front part of a vehicle body of a vehicle that results in an excessively small tilting angle of the entire vehicle and thus leading to poor operation safety of the vehicle.

For such an objective, the essential technical measure provided in claim 1 of the application is to provide a tilting mechanism of a vehicle having two front wheels, the vehicle comprising a vehicle frame unit, the vehicle frame unit having a front side that is provided with a steering support member, the steering support member being rotatably provided with a tilting mechanism, the steering support member receiving a steering column to penetrate through an interior thereof; the tilting mechanism comprising an upper crossbar rotatably mounted to the steering support member of the vehicle frame unit, a lower crossbar rotatably mounted to the steering support member and located below the upper crossbar, a right-side bar and a left-side bar pivotally connected to two ends of the upper crossbar respectively, two ends of the lower crossbar being pivotally connected to the right-side bar and the left-side bar, the right-side bar receiving a right-side axle therein to extend therethrough, the left-side bar receiving a left-side axle therein to extend therethrough; a right-side supporting piece coupled to the right-side axle of the right-side bar including a right-side shock absorber, a left-side supporting piece coupled to the left-side axle of the left-side bar and including a left-side shock absorber, a central supporting member coupled to a lower portion of the steering column, characterized in that the right-side bar is pivotally jointed, at an upper portion thereof, to the upper crossbar; the left-side bar is pivotally jointed, at an upper end thereof, to the upper crossbar; the right-side bar and the left-side bar are provided with bearing units, the right-side and left-side bars being each provided with an upper supporting member, the bearing units being mounted to the upper supporting members; pivotal joint points between the left-side and right-side bars and the upper crossbar form rotation center axes, the bearing units being located below the rotation center axes; and the right-side bar and the left-side bar have upper ends that are not projecting beyond an upper end face of the upper crossbar.

For such an objective, the essential technical measure provided in claim 2 of the application is to provide a tilting mechanism of a vehicle having two front wheels, wherein the left-side bar and the upper crossbar are provided therebetween with one of the upper supporting members, and the left-side bar and the lower crossbar are provided therebetween with one of the lower supporting members; the right-side bar and the upper crossbar are provided therebetween with one of the upper supporting members, and the right-side bar and the lower crossbar are provided therebetween with one of the lower supporting members; the upper supporting members each comprise an upper-supporting-member top part that is located above the rotation center axis and an upper-supporting-member bottom part that is located below the rotation center axis, and the lower supporting members each comprise a lower-supporting-member top part that is located above the rotation center axis and a lower-supporting-member bottom part that is located below the rotation center axis; the bearing units that are arranged on the upper supporting members are arranged on the upper-supporting-member bottom parts, and the bearing units that are arranged on the lower supporting members are arranged on the lower-supporting-member bottom parts.

For such an objective, the essential technical measure provided in claim 3 of the application is to provide a tilting mechanism of a vehicle having two front wheels, wherein the bearing unit includes a lower race, a ball assembly, an upper race, and a housing; the lower race and the upper race receive the ball assembly to arrange therebetween, the housing being set on and covering the upper race.

For such an objective, the essential technical measure provided in claim 4 of the application is to provide a tilting mechanism of a vehicle having two front wheels, wherein the upper-supporting-member top parts of the upper supporting members are each covered with a closure cap.

For such an objective, the essential technical measure provided in claim 5 of the application is to provide a tilting mechanism of a vehicle having two front wheels, wherein the upper supporting members of the left-side and right-side bars have upper ends that are not projecting beyond an upper end face of the upper crossbar.

For such an objective, the essential technical measure provided in claim 6 of the application is to provide a tilting mechanism of a vehicle having two front wheels, wherein the closure cap has an upper end that is not projecting beyond an upper end face of the upper crossbar.

The efficacy that the present invention may achieve with the essential technical measure of claim 1 is that the disposition of the right-side rotation axle, the left-side axle, each of the supporting members, and each of the bearing units that are provided on the right-side bar and the left-side bar can be made lower to thereby minimize the vehicle-body cover that is provided on the front side of the vehicle body of the vehicle without sacrifice a stroke arrangement of the shock absorbers and operation and design clearances of the steering handlebar 43 to increase a tiltable angle of the entirety of the vehicle 4 and thus enhance performance of the vehicle 4 resisting a centrifugal effect caused by passing through a road curve at a high speed and thus helping improve operation safety of the vehicle.

The efficacy that the present invention may achieve with the essential technical measure of claim 1 is also that on the one hand, direction-changing performance of the right-side axle and the left-side axle can be ensured, and on the other hand, the front side of the vehicle body of the vehicle can be made minimized without sacrifice a stroke arrangement of the shock absorbers and operation and design clearances of the steering handlebar to increase a tiltable angle of the entirety of the vehicle and thus enhance performance of the vehicle resisting a centrifugal effect caused by passing through a road curve at a high speed and thus helping improve operation safety of the vehicle.

The efficacy that the present invention may achieve with the essential technical measure of claim 2 is that the front side of the vehicle body of the vehicle can be made minimized without sacrifice a stroke arrangement of the shock absorbers and operation and design clearances of the steering handlebar to increase a tiltable angle of the entirety of the vehicle and thus enhance performance of the vehicle resisting a centrifugal effect caused by passing through a road curve at a high speed and thus helping improve operation safety of the vehicle.

The efficacy that the present invention may achieve with the essential technical measure of claim 3 is that the performance of direction changing of the right-side axle and the left-side axle can be ensured.

The efficacy that the present invention may achieve with the essential technical measure of claim 4 is that effects of dust protection and moisture resistance can be enhanced at connection sites of the upper crossbar and the right-side and left-side bars.

The efficacy that the present invention may achieve with the essential technical measure of claim 5 is that the front side of the vehicle body of the vehicle can be made minimized.

The efficacy that the present invention may achieve with the essential technical measure of claim 6 is that the front side of the vehicle body of the vehicle can be made minimized.

### BRIEF DESCRIPTION OF THE DRAWINGS

FIG. 1 is a schematic view showing a conventional tilting mechanism of a vehicle having two front wheels.
FIG. 2 is a cross-sectional view showing a left-side bar the conventional tilting mechanism of a vehicle having two front wheels.
FIG. 3 is a schematic view showing tilting of the conventional tilting mechanism of a vehicle having two front wheels.
FIG. 4 is a schematic view showing a tilting mechanism of a vehicle having two front wheels according to the present invention.
FIG. 5 is a cross-sectional view showing a left-side bar of the tilting mechanism of a vehicle having two front wheels according to the present invention.
FIG. 6 is a side elevational view showing the tilting mechanism of a vehicle having two front wheels according to the present invention in combination with a vehicle-body front cover; and
FIG. 7 is a schematic view showing tilting of the tilting mechanism of a vehicle having two front wheels according to the present invention.

### DETAILED DESCRIPTION OF THE PREFERRED EMBODIMENT

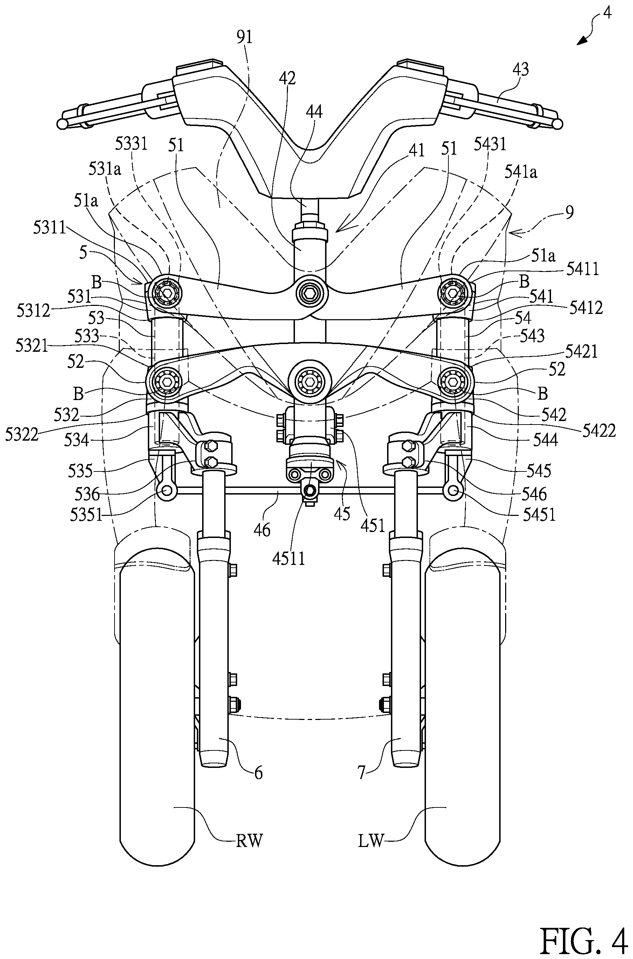

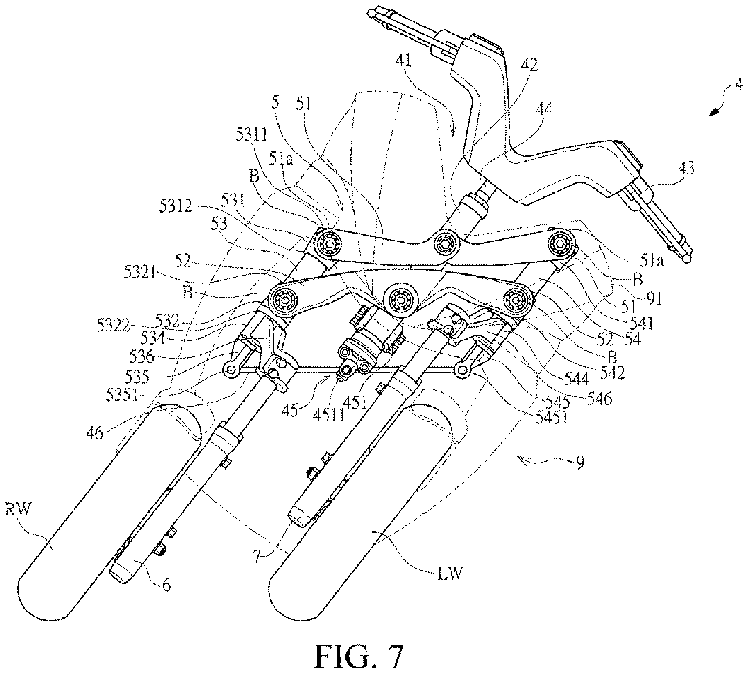

As shown in FIGS. 4 and 7, a vehicle 4 at least includes a vehicle frame unit 41, the vehicle frame unit 41 having a front side (a direction toward a vehicle head being referred to as "front") that is provided with a steering support member 42, the steering support member 42 being rotatably provided with a tilting mechanism 5; the steering support member 42 has an upper side that is provided with a steering handlebar 43, the steering handlebar 43 having a lower end that is provided with a steering column 44, the steering column 44 penetrating from an upper side of the steering support member 42 into an interior the steering support member 42, the steering column 44 having a lower end projecting out of a lower end of the steering support member 42, the lower end portion of the steering column 44 that projects out of the steering support member 42 being provided with a central supporting member 45, the central supporting member 45 being connected with a central connection board 451, the central connection board 451 being provided with a central connection section 4511.

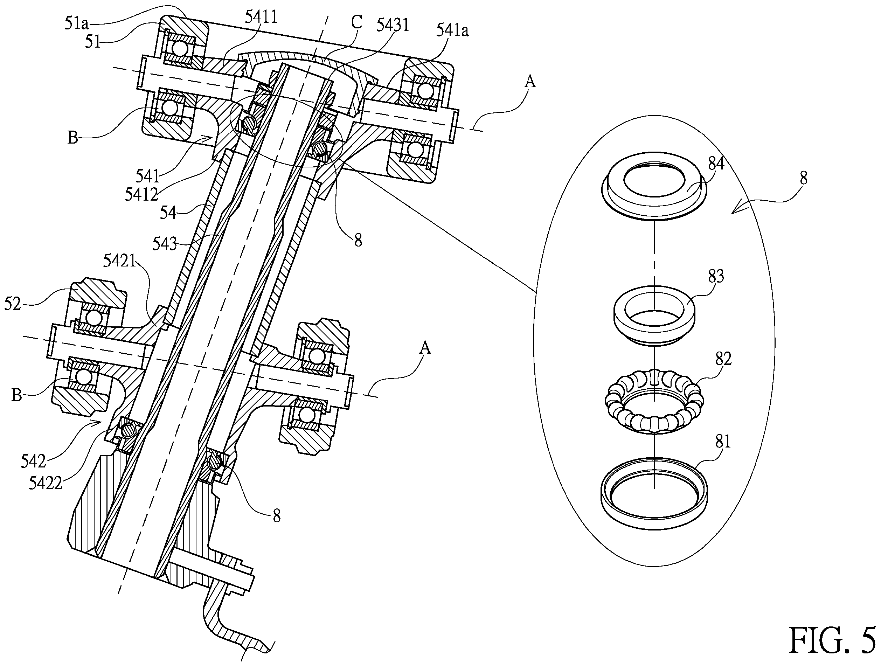

As shown in FIGS. 4, 5, and 7, the tilting mechanism 5 includes an upper crossbar 51 rotatably mounted to the steering support member 42, a lower crossbar 52 rotatably mounted to the steering support member 42 and located below the upper crossbar 51, a right-side bar 53 pivotally jointed to the upper crossbar 51 and the lower crossbar 52, and a left-side bar 54 pivotally jointed to the upper crossbar 51 and the lower crossbar 52 (wherein the right side and the left side used herein are respectively defined that the right side is the side corresponding to the right hand of a rider sitting on the vehicle body and the left side is the side corresponding to the left hand of the rider).

As shown in FIGS. 4, 5, 6, and 7, the right-side bar 53 includes an upper supporting member 531 arranged on an upper portion, a lower supporting member 532 arranged on a lower portion, and a right-side axle 533; the right-side bar 53 and the upper crossbar 51 are arranged to receive the upper supporting member 531 disposed therebetween, the right-side bar 53 and the lower crossbar 52 being arranged to receive the lower supporting member 532 disposed therebetween, the upper portion of the right-side bar 53 being connected to the upper crossbar 51 by the upper supporting member 531, an upper end 531a of the upper supporting member 531 of the right-side bar 53 being not projecting beyond an upper end face 51a of the upper crossbar 51, the lower portion of the right-side bar 53 being connected to the lower crossbar 52 by the lower supporting member 532, the right-side axle 533 being received in and extending through the interior of the right-side bar 53; the right-side axle 533 is coupled, at a lower end thereof, to a right-side supporting piece 534, the right-side supporting piece 534 being coupled to a right-side connection board 535 and a right-side connection bridge 536, the right-side connection board 535 being provided thereon with a right-side connection section 5351, the right-side connection bridge 536 being coupled to and supporting a right-side shock absorber 6, the right-side shock absorber 6 supporting at a lower end thereof, a right-side front wheel rw.

As shown in FIGS. 4, 5, 6, and 7, the left-side bar 54 includes an upper supporting member 541 arranged on an upper portion, a lower supporting member 542 arranged on a lower portion, and a left-side axle 543; the left-side bar 54 and the upper crossbar 51 are arranged to receive the upper supporting member 541 disposed therebetween, the left-side bar 54 and the lower crossbar 52 being arranged to receive the lower supporting member 542 disposed therebetween, the upper portion of the left-side bar 54 being connected to the upper crossbar 51 by the upper supporting member 541, an upper end 541a of the upper supporting member 541 of the left-side bar 54 being not projecting beyond an upper end face 51a of the upper crossbar 51, the lower portion of the left-side bar 53 being connected to the lower crossbar 52 by the lower supporting member 542, the left-side axle 543 being received in and extending through the interior of the left-side bar 54; the left-side axle 543 is coupled, at a lower end thereof, to a left-side supporting piece 544, the left-side supporting piece 544 being coupled to a left-side connection board 545 and a left-side connection bridge 546, the left-side connection board 545 being provided thereon with a left-side connection section 5451; the left-side connection bridge 546 is coupled to and support a left-side shock absorber 7, the left-side shock absorber 7 supporting, at a lower end thereof, a left-side front wheel lw.

As shown in FIGS. 4, 5, 6, and 7, the tilting mechanism 5 is configured as a frame structure that is generally of a parallelogram through the upper crossbar 51 rotatably mounted to an upper portion of the steering support member 42, the lower crossbar 52 rotatably mounted to a lower portion of the steering support member 42, and the right-side bar 53 pivotally jointed, at upper and lower portions thereof, to the upper crossbar 51 and the lower crossbar 52, and the left-side bar 54 pivotally jointed, at upper and lower portions thereof, to the upper crossbar 51 and the lower crossbar 52; as such, the upper crossbar 51 is rotatable, with the steering support member 42 a rotation center, with respect to the lower crossbar 52, the right-side bar 53 and the left-side bar 54, the lower crossbar 52 being rotatable, with the steering support member 42 being a rotation center, with respect to the upper crossbar 51, the right-side bar 53 and the left-side bar 54, the right-side bar 53 and the left-side bar 54 being rotatable with respect to the upper crossbar 51 and the lower crossbar 52.

As shown in FIGS. 4, 5, and 6, the right-side connection section 5351 of the right-side bar 53, the central connection section 4511 of the central supporting member 45, and the left-side connection section 5451 of the left-side bar 54 are connected to a steering tie rod 46, the steering tie rod 46 being pivotally mounted, through the above arrangement of pivotal connection, to extend toward a rear side of the vehicle body and set at a location below the tilting mechanism 5.

As shown in FIGS. 4, 5, and 7, the right-side bar 53 and the left-side bar 54 are of identical structures, and only the left-side bar 54 will be taken as an example to describe an inside structure thereof in the following; the upper supporting member 541 of the left-side bar 54 includes an upper-supporting-member top part 5411 and an upper-supporting-member bottom part 5412; the lower supporting member 542 of the left-side bar 54 includes a lower-supporting-member top part 5421 and a lower-supporting-member bottom part 5422; the lower-supporting-member bottom part 5411of the upper supporting member 541 and the lower-supporting-member bottom part 5422 of the lower supporting member 542 are each fit with a bearing unit 8, the bearing units 8 arranged on the upper supporting member 541 and the lower supporting member 542 being generally of identical basic structures, but having assembling sequence and disposition slightly different from each other, the following providing a description of the bearing unit 8 by taking the bearing unit 8 that is arranged on the upper supporting member 541 as an example, the bearing unit 8 including, in sequence from bottom to top, a lower race 81, a ball assembly 82, an upper race 83, and a housing 84; the lower race 81 is supported on the upper-supporting-member bottom part 5412, the lower race 81 and the upper race 83 receiving the ball assembly 82 to arrange therebetween, the housing 84 being set on and cover the upper race 83, the bearing unit 8 supporting the left-side axle 541 of the left-side bar 54; the bearing unit 8 that is mounted on the upper-supporting-member bottom part 5412 being arranged below a rotation center axis a of a pivotal joint point b of the left-side bar 54 and the upper crossbar 51, the rotation center axis a extending through the upper supporting member 541 of the left-side bar 54, meaning the rotation center axis a extends between the upper-supporting-member top part 5411 and the upper-supporting-member bottom part 5412 of the upper supporting member 541; the bearing unit 8 that is mounted on the lower-supporting-member bottom part 5442 of the lower supporting member 542 being arranged below a rotation center axis a of a pivotal joint point b of the left-side bar 54 and the lower crossbar 52, the rotation center axis a extending between the lower-supporting-member top part 5421 and the lower-supporting-member bottom part 5422 of the lower supporting member 542, the left-side axle 543 being supported, at an upper portion thereof, by the bearing unit 8 of the upper-support-member bottom part 5412 of the upper support member 541, the left-side axle 543 being supported, at a lower portion thereof, by the bearing unit 8 of the lower-supporting-member bottom part 5422 of the lower supporting member 542; as such, the upper end 5431 of the left-side axle 543 of the left-side bar 54 is made not projecting beyond the upper end face 51a of the upper crossbar 51, specifically speaking, due to the upper end 5431 of the left-side axle 543 of the left-side bar 54 being not projecting outside the upper end face 51a of the upper crossbar 51, it is possible to reduce a height of the tilting mechanism 5 in a direction toward the upper side of the vehicle body; the upper-supporting-member top part 5411 of the upper supporting member 541 is covered and closed, at an upper end face thereof, by a closure cap c, the closure cap c being not projecting beyond the upper end face 51a of the upper crossbar 51.

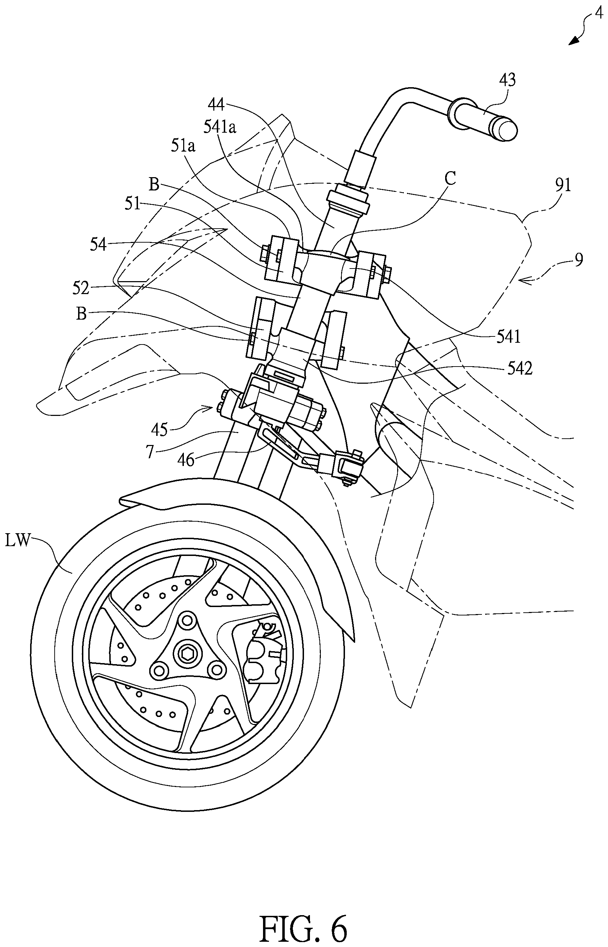

As shown in FIGS. 4 and 6, since the upper end 5431 of the left-side axle 543 of the left-side bar 54 is not projecting beyond the upper end face 51a of the upper crossbar 51 (this being also applicable to the upper end 5331 of the right-side axle 533 of the right-side bar 53), the height of the tilting mechanism 5 in a direction toward the upper side of the vehicle body can be effectively reduced, so that it is not necessary to enlarge a front vehicle-body cover 91 of a vehicle-body cover 9 that is set on and covers the tilting mechanism 5, and as such, the operation clearance and the design clearance of the steering handlebar 43 may be imposed with enhanced flexibility, to thereby provide an increased tilting angle to the entirety of the vehicle 4, and with the tilting angle of the entirety of the vehicle 4 being so increased, the performance of the vehicle 4 to resist a centrifugal effect caused by passing through a road curve at a high speed is made better to thereby enhancing operation safety of the vehicle 4.

The first efficacy that the present invention achieves with the above structure is that the right-side bar 53 and the left-side bar 54 are made not projecting, at the upper end 5431 thereof, beyond the upper end face 51a of the upper crossbar 51; as such, the disposition of the right-side rotation axle 533, the left-side axle 543, each of the supporting members 531, 532, 541, 542, and each of the bearing units 8 that are provided on the right-side bar 53 and the left-side bar 54 can be made lower to thereby minimize the vehicle-body cover 91 that is provided on the front side of the vehicle body of the vehicle 4 without sacrifice a stroke arrangement of the shock absorbers 6, 7 and operation and design clearances of the steering handlebar 43 to increase a tiltable angle of the entirety of the vehicle 4 and thus enhance performance of the vehicle 4 resisting a centrifugal effect caused by passing through a road curve at a high speed and thus helping improve operation safety of the vehicle 4.

The second Further efficacy that the present invention achieves with the above structure is that the upper portion of the right-side bar 53 is pivotally jointed to the upper crossbar 51; the upper portion of the left-side bar 54 is pivotally jointed to the upper crossbar 51; the right-side bar 51 and the left-side bar 54 are provided with the bearing units 8, the left-side and right-side bars 53, 54 provided with the upper supporting member 531, 541, the bearing units 8 being mounted on the upper supporting members 531, 541; the pivotal joint points b of the right-side and left-side bars 53, 54 and the upper crossbar 51 form rotation center axes a, the bearing units 8 being located below the rotation center axes a; as such, on the one hand, direction-changing performance of the right-side axle 533 and the left-side axle 543 can be ensured, and on the other hand, the front side of the vehicle body of the vehicle 4 can be made minimized without sacrifice a stroke arrangement of the shock absorbers 6, 7 and operation and design clearances of the steering handlebar 43 to increase a tiltable angle of the entirety of the vehicle 4 and thus enhance performance of the vehicle 4 resisting a centrifugal effect caused by passing through a road curve at a high speed and thus helping improve operation safety of the vehicle 4.

Second efficacy that the present invention achieves with the above structure is that the upper supporting member 541 is arranged between the left-side bar 54 and the upper crossbar 51 and the lower supporting member 542 is arranged between the left-side bar 54 and the lower crossbar 52; the upper supporting member 531 is arranged between the right-side bar 53 and the upper crossbar 51 and the lower supporting member 532 is arranged between the right-side bar 53 and the lower crossbar 52; the upper supporting member 541, 531 include the upper-supporting-member top parts 5411, 5311 that are located above the rotation center axis a and the upper-supporting-member bottom parts 5412, 5312 that are located below the rotation center axis a, and the lower supporting member 542, 532 include the lower-supporting-member top parts 5421, 5321 that are located above the rotation center axis a and the lower-supporting-member bottom parts 5422, 5322 that are located below the rotation center axis a; the bearing units 5 that are arranged on the upper supporting members 541, 531 are arranged on the upper-supporting-member bottom parts 5412, 5312, and the bearing units 8 that are arranged on the lower supporting members 542, 532 are arranged on the lower-supporting-member bottom parts 5422, 5322, so as to make the upper supporting members 531, 541 and the lower supporting members 542, 532 not projecting beyond the upper end face 51a of the upper crossbar 51; as such, the front side of the vehicle body of the vehicle 4 can be made minimized without sacrifice a stroke arrangement of the shock absorbers 6, 7 and operation and design clearances of the steering handlebar 43 to increase a tiltable angle of the entirety of the vehicle 4 and thus enhance performance of the vehicle 4 resisting a centrifugal effect caused by passing through a road curve at a high speed and thus helping improve operation safety of the vehicle 4.

Third efficacy that the present invention achieves with the above structure is that the bearing units 8 includes the lower race 81, the ball assembly 82, the upper race 83 and the housing 84; the lower race 81 and the upper race 83 receive the ball assembly 82 to arrange therebetween, the housing 84 being set on and covering the upper race 83; as such, the performance of direction changing of the right-side axle 533 and the left-side axle 543 can be ensured.

Fourth efficacy that the present invention achieves with the above structure is that the upper-supporting-member top part 5411 of the upper supporting member 541 is covered with a closure cap c; as such, effects of dust protection and moisture resistance can be enhanced at connection sites of the upper crossbar 51 and the right-side and left-side bars 53, 54.

Fifth efficacy that the present invention achieves with the above structure is that the upper ends of the upper supporting members 541, 531 of the left-side and right-side bars 54, 53 are made not projecting beyond the upper end face 51a of the upper crossbar 51; as such, the front side of the vehicle body of the vehicle 4 can be made minimized.

Sixth efficacy that the present invention achieves with the above structure is that the upper end of the closure cap c is made not projecting beyond the upper end face 51a of the upper crossbar 51; as such, the front side of the vehicle body of the vehicle 4 can be made minimized.

## Claims

1. A tilting mechanism (5) of a vehicle (4) having two front wheels (rw, lw), the vehicle (4) comprising a vehicle frame unit (41), the vehicle frame unit (41) having a front side that is provided with a steering support member (42), the steering support member (42) being rotatably provided with a tilting mechanism (5), the steering support member (42) receiving a steering column (44) to penetrate through an interior thereof; the tilting mechanism (5) comprising an upper crossbar (51) rotatably mounted to the steering support member (42) of the vehicle frame unit (41), a lower crossbar (52) rotatably mounted to the steering support member (42) and located below the upper crossbar (51), a right-side bar (53) and a left-side bar (54) pivotally connected to two ends of the upper crossbar (51) respectively, two ends of the lower crossbar (52) being pivotally connected to the right-side bar (53) and the left-side bar (54), the right-side bar (53) receiving a right-side axle (533) therein to extend therethrough, the left-side bar (54) receiving a left-side axle (543) therein to extend therethrough; a right-side supporting piece (534) coupled to the right-side axle (533) of the right-side bar (53) including a right-side shock absorber (6), a left-side supporting piece (544) coupled to the left-side axle (543) of the left-side bar (54) and including a left-side shock absorber (7), a central supporting member (45) coupled to a lower portion of the steering column (44), **characterized in that** the right-side bar (53) is pivotally jointed, at an upper portion thereof, to the upper crossbar (51); the left-side bar (54) is pivotally jointed, at an upper end thereof, to the upper crossbar (51); the right-side bar (53) and the left-side bar (54) are provided with bearing units (8), the right-side and left-side bars (53, 54) being each provided with an upper supporting member (531, 541), the bearing units (8) being mounted to the upper supporting members (531, 541); pivotal joint points (b) between the left-side and right-side bars (54, 53) and the upper crossbar (51) form rotation center axes (a), the bearing units (8) being located below the rotation center axes (a); and the right-side bar (53) and the left-side bar (54) have upper ends (5431) that are not projecting beyond an upper end face (51a) of the upper crossbar (51).

2. The tilting mechanism of a vehicle having two front wheels according to claim 1, wherein the left-side bar (54) and the upper crossbar (51) are provided therebetween with the upper supporting member (541), and the left-side bar (54) and the lower crossbar (52) are provided therebetween with a lower supporting member (542); the right-side bar (53) and the upper crossbar (51) are provided therebetween with the upper supporting member (531), and the right-side bar (53) and the lower crossbar (52) are provided therebetween with a lower supporting member (532); the upper supporting members (541, 531) each comprise an upper-supporting-member top part (5411, 5311) that is located above the rotation center axis (a) and an upper-supporting-member bottom part (5412, 5312) that is located below the rotation center axis (a), and the lower supporting members (542, 532) each comprise a lower-supporting-member top part (5421, 5321) that is located above the rotation center axis (a) and a lower-supporting-member bottom part (5422, 5322) that is located below the rotation center axis (a); the bearing units (8) that are arranged on the upper supporting members (541, 531) are arranged on the upper-supporting-member bottom parts (5412, 5312), and the bearing units (8) that are arranged on the lower supporting members (542, 532) are arranged on the lower-supporting-member bottom parts (5422, 5322).

3. The tilting mechanism of a vehicle having two front wheels according to claim 1 or 2, wherein the bearing unit (8) includes a lower race (81), a ball assembly (82), an upper race (83), and a housing (84); the lower race (81) and the upper race (82) receive the ball assembly (82) to arrange therebetween, the housing (84) being set on and covering the upper race (82).

4. The tilting mechanism of a vehicle having two front wheels according to claim 2, wherein the upper-supporting-member top parts (5311, 5411) of the upper supporting members (531, 541) are each covered with a closure cap (c).

5. The tilting mechanism of a vehicle having two front wheels according to claim 1, wherein the upper supporting members (541, 531) of the left-side and right-side bars (54, 53) have upper ends (541a, 531a) that are not projecting beyond an upper end face (51a) of the upper crossbar (51).

6. The tilting mechanism of a vehicle having two front wheels according to claim 4, wherein the closure cap (c) has an upper end that is not projecting beyond an upper end face (51a) of the upper crossbar (51).

## Patentansprüche

1. Kippmechanismus (5) eines Fahrzeugs (4) mit zwei Vorderrädern (rw, lw), wobei das Fahrzeug (4) eine Fahrzeugrahmeneinheit (41) umfasst, wobei die Fahrzeugrahmeneinheit (41) eine Vorderseite aufweist, die mit einem Lenkstützelement (42) versehen ist, wobei das Lenkstützelement (42) drehbar mit einem Kippmechanismus (5) versehen ist, wobei das Lenkstützelement (42) eine Lenksäule (44) aufnimmt, um durch ihr Inneres zu dringen; wobei der Kippmechanismus (5) eine obere Querstange (51) umfasst, die drehbar an dem Lenkstützelement (42) der Fahrzeugrahmeneinheit (41) montiert ist, eine untere Querstange (52), die drehbar an dem Lenkstützelement (42) montiert ist und sich unterhalb der oberen Querstange (51) befindet, eine rechte Stange (53) und eine linke Stange (54), die jeweils mit zwei Enden der oberen Querstange (51) schwenkbar verbunden sind, wobei zwei Enden der unteren Querstange (52) mit der rechten Stange (53) und der linken Stange (54) schwenkbar verbunden sind, die rechte Stange (53) eine rechte Achse (533) darin aufnimmt, um sich dadurch zu erstrecken, die linke Stange (54) eine linke Achse (543) darin aufnimmt, um sich dadurch zu erstrecken; wobei ein rechtes Stützstück (534), das mit der rechten Achse (533) der rechten Stange (53) gekoppelt ist, einen rechten Stoßdämpfer (6) enthält, ein linkes Stützstück (544), das mit der linken Achse (543) der linken Stange (54) gekoppelt ist, einen linken Stoßdämpfer (7) enthält, ein zentrales Stützelement (45) mit einem unteren Teil der Lenksäule (44) verbunden ist, **gekennzeichnet dadurch, dass** die rechte Stange (53) an einem oberen Teil davon mit der oberen Querstange (51) schwenkbar verbunden ist; die linke Stange (54) an einem oberen Ende davon mit der oberen Querstange (51) schwenkbar verbunden ist; wobei die rechte Stange (53) und die linke Stange (54) mit Lagereinheiten (8) versehen sind, wobei die rechte und linke Stange (53, 54) jeweils mit einem oberen Stützelement (531, 541) versehen sind, wobei die Lagereinheiten (8) an den oberen Stützelementen (531, 541) montiert sind; wobei Drehgelenkpunkte (b) zwischen der linken und rechten Stange (54, 53) und der oberen Querstange (51) Drehmittelachsen (a) bilden, wobei die Lagereinheiten (8) sich unterhalb der Drehmittelachsen (a) befinden; und die rechte Stange (53) und die linke Stange (54) obere Enden (5431) aufweisen, die nicht über eine obere Endfläche (51a) der oberen Querstange (51) hinausragen.

2. Kippmechanismus eines Fahrzeugs mit zwei Vorderrädern nach Anspruch 1, wobei die linke Stange (54) und die obere Querstange (51) dazwischen mit dem oberen Stützelement (541) versehen sind und die linke Stange (54) und die untere Querstange (52) dazwischen mit einem unteren Stützelement (542) versehen sind; wobei die rechte Stange (53) und die obere Querstange (51) dazwischen mit dem oberen Stützelement (531) versehen sind und die rechte Stange (53) und die untere Querstange (52) dazwischen mit einem unteren Stützelement (532) versehen sind; wobei die oberen Stützelemente (541, 531) jeweils ein oberes Stützelement-Oberteil (5411, 5311), das sich oberhalb der Drehmittelachse (a) befindet, und ein oberes Stützelement-Unterteil (5412, 5312) umfassen, das sich unterhalb der Drehmittelachse (a) befindet, und die unteren Stützelemente (542, 532) jeweils ein unteres Stützelement-Oberteil (5421, 5321), das sich oberhalb der Drehmittelachse (a) befindet, und ein unteres Stützelement-Unterteil (5422, 5322) umfassen, das sich unterhalb der Drehmittelachse (a) befindet; wobei die Lagereinheiten (8), die an den oberen Stützelementen (541, 531) angeordnet sind, an den oberen Stützelement-Unterteilen (5412, 5312) angeordnet sind und die Lagereinheiten (8), die an den unteren Stützelementen (542, 532) angeordnet sind, an den unteren Stützelement-Unterteilen (5422, 5322) angeordnet sind.

3. Kippmechanismus eines Fahrzeugs mit zwei Vorderrädern nach Anspruch 1 oder 2, wobei die Lagereinheit (8) einen unteren Laufring (81), eine Kugelanordnung (82), einen oberen Laufring (83) und ein Gehäuse (84) enthält; wobei der untere Laufring (81) und der obere Laufring (82) die Kugelanordnung (82) aufnehmen, um sie dazwischen anzuordnen, wobei das Gehäuse (84) auf den oberen Laufring (82) aufgesetzt ist und diesen abdeckt.

4. Kippmechanismus eines Fahrzeugs mit zwei Vorderrädern nach Anspruch 2, wobei die oberen Stützelement-Oberteile (5311, 5411) der oberen Stützelemente (531, 541) jeweils mit einer Verschlusskappe (c) abgedeckt sind.

5. Kippmechanismus eines Fahrzeugs mit zwei Vorderrädern nach Anspruch 1, wobei die oberen Stützelemente (541, 531) der linken und rechten Stange (54, 53) obere Enden (541a, 531a) aufweisen, die nicht über eine obere Endfläche (51a) der oberen Querstange (51) hinausragen.

6. Kippmechanismus eines Fahrzeugs mit zwei Vorderrädern nach Anspruch 4, wobei die Verschlusskappe (c) ein oberes Ende aufweist, das nicht über eine obere Endfläche (51a) der oberen Querstange (51) hinausragt.

## Revendications

1. Mécanisme d'inclinaison (5) d'un véhicule (4) doté de deux roues avant (rw, 1w), le véhicule (4) comprenant une unité de châssis de véhicule (41), l'unité de châssis de véhicule (41) ayant un côté avant qui est pourvu d'un élément de support de direction (42), l'élément de support de direction (42) étant pourvu de manière rotative d'un mécanisme d'inclinaison (5), l'élément de support de direction (42) recevant une colonne de direction (44) pour pénétrer à travers un intérieur de celui-ci ; le mécanisme d'inclinaison (5) comprenant une barre transversale supérieure (51) montée de manière rotative sur l'élément de support de direction (42) de l'unité de châssis de véhicule (41), une barre transversale inférieure (52) montée de manière rotative sur l'élément de support de direction (42) et située sous la barre transversale supérieure (51), une barre latérale droite (53) et une barre latérale gauche (54) reliées de manière pivotante à deux extrémités de la barre transversale supérieure (51) respectivement, deux extrémités de la barre transversale inférieure (52) étant reliées de manière pivotante à la barre latérale droite (53) et à la barre latérale gauche (54), la barre latérale droite (53) recevant un essieu latéral droit (533) à l'intérieur de celle-ci pour s'étendre à travers elle, la barre latérale gauche (54) recevant un essieu latéral gauche (543) à l'intérieur de celle-ci pour s'étendre à travers elle ; une pièce de support latérale droite (534) couplée à l'essieu latéral droit (533) de la barre latérale droite (53) incluant un amortisseur latéral droit (6), une pièce de support latérale gauche (544) couplée à l'essieu latéral gauche (543) de la barre latérale gauche (54) et incluant un amortisseur latéral gauche (7), un élément de support central (45) couplé à une portion inférieure de la colonne de direction (44), **caractérisée en ce que** la barre latérale droite (53) est articulée de manière pivotante, au niveau d'une portion supérieure de celle-ci, à la barre transversale supérieure (51) ; la barre latérale gauche (54) est articulée de manière pivotante, au niveau d'une extrémité supérieure de celle-ci, à la barre transversale supérieure (51) ; la barre latérale droite (53) et la barre latérale gauche (54) sont pourvues d'unités de palier (8), les barres latérales droite et gauche (53, 54) étant chacune pourvues d'un élément de support supérieur (531, 541), les unités de palier (8) étant montées sur les éléments de support supérieurs (531, 541) ; des points d'articulation pivotants (b) entre les barres latérales gauche et droite (54, 53) et la barre transversale supérieure (51) forment des axes de centre de rotation (a), les unités de palier (8) étant situées sous les axes de centre de rotation (a) ; et la barre latérale droite (53) et la barre latérale gauche (54) ont des extrémités supérieures (5431) qui ne font pas saillie au-delà d'une face d'extrémité supérieure (51a) de la barre transversale supérieure (51).

2. Mécanisme d'inclinaison d'un véhicule doté de deux roues avant selon la revendication 1, où la barre latérale gauche (54) et la barre transversale supérieure (51) sont pourvues entre elles de l'élément de support supérieur (541), et la barre latérale gauche (54) et la barre transversale inférieure (52) sont pourvues entre elles d'un élément de support inférieur (542) ; la barre latérale droite (53) et la barre transversale supérieure (51) sont pourvues entre elles d'un élément de support supérieur (531), et la barre latérale droite (53) et la barre transversale inférieure (52) sont pourvues entre elles d'un élément de support inférieur (532) ; les éléments de support supérieurs (541, 531) comprennent chacun une partie supérieure d'élément de support supérieur (5411, 5311) qui est située au-dessus de l'axe de centre de rotation (a) et une partie inférieure d'élément de support supérieur (5412, 5312) qui est située sous l'axe de centre de rotation (a), et les éléments de support inférieurs (542, 532) comprennent chacun une partie supérieure d'élément de support inférieur (5421, 5321) qui est située au-dessus de l'axe de centre de rotation (a) et une partie inférieure d'élément de support inférieur (5422, 5322) qui est située sous l'axe de centre de rotation (a) ; les unités de palier (8) qui sont disposées sur les éléments de support supérieurs (541, 531) sont disposées sur les parties inférieures d'éléments de support supérieurs (5412, 5312), et les unités de palier (8) qui sont disposées sur les éléments de support inférieurs (542, 532) sont disposées sur les parties inférieures d'éléments de support inférieurs (5422, 5322).

3. Mécanisme d'inclinaison d'un véhicule doté de deux roues avant selon la revendication 1 ou 2, où l'unité de palier (8) inclut une bague inférieure (81), un ensemble à billes (82), une bague supérieure (83) et un boîtier (84); la bague inférieure (81) et la bague supérieure (82) reçoivent l'ensemble à billes (82) pour être disposé entre elles, le boîtier (84) étant placé sur la bague supérieure (82) et la recouvrant.

4. Mécanisme d'inclinaison d'un véhicule doté de deux roues avant selon la revendication 2, où les parties supérieures d'éléments de support supérieurs (5311, 5411) des éléments de support supérieurs (531, 541) sont chacune recouvertes d'un capuchon de fermeture (c).

5. Mécanisme d'inclinaison d'un véhicule doté de deux roues avant selon la revendication 1, où les éléments de support supérieurs (541, 531) des barres latérales gauche et droite (54, 53) ont des extrémités supérieures (541a, 531a) qui ne font pas saillie au-delà d'une face d'extrémité supérieure (51a) de la barre transversale supérieure (51).

6. Mécanisme d'inclinaison d'un véhicule doté de deux roues avant selon la revendication 4, où le capuchon de fermeture (c) a une extrémité supérieure qui ne fait pas saillie au-delà d'une face d'extrémité supérieure (51a) de la barre transversale supérieure (51).
